# EUROPÄISCHE PATENTSCHRIFT

(11) **EP 2 445 754 B1**
(45) Veröffentlichungstag und Bekanntmachung des Hinweises auf die Patenterteilung: **09.08.2017**
(21) Anmeldenummer: 10726915.1
(22) Anmeldetag: 21.06.2010
(51) Int. Cl.: H05B 33/12, B64D 11/00, B64C 27/82

(54) **BELEUCHTUNGSVORRICHTUNG MIT EINER MEHRZAHL VON LICHTQUELLEN**
LIGHTING DEVICE HAVING A PLURALITY OF LIGHT SOURCES
DISPOSITIF D'ÉCLAIRAGE DOTÉ D'UNE PLURALITÉ DE SOURCES LUMINEUSES

(30) Priorität: 22.06.2009 DE 102009029874; 22.06.2009 US 219043 P
(43) Veröffentlichungstag der Anmeldung: 02.05.2012
(73) Patentinhaber: Airbus Operations GmbH, 21129 Hamburg (DE)
(72) Erfinder: MARWEDE, Alexandra, 21129 Hamburg (DE); DEHMEL, Ronny, 88433 Schemmerhofen-Grafenwald (DE)
(74) Vertreter: Gunzelmann, Rainer
(86) Internationale Anmeldenummer: PCT/EP2010/003731
(87) Internationale Veröffentlichungsnummer: WO 2010/149325

(56) Entgegenhaltungen:
- US-A- 4 777 402
- US-A1- 2008 246 389
- DATABASE WPI Week 200814 Thomson Scientific, London, GB; AN 2008-B80705 XP002596263 & CN 200 980 404 Y (HUANG Z) 28. November 2007 (2007-11-28)

## Beschreibung

Die Erfindung betrifft eine Beleuchtungsvorrichtung mit einer Mehrzahl von Lichtquellen, die eine Schichtstruktur mit mehreren übereinander angeordneten Schichten umfasst.

Aus der DE 10 2007 029 140 und der DE 10 2008 048 835 ist jeweils eine Beleuchtungsvorrichtung mit einer Mehrzahl von Leuchtdioden in einem Deckenelement bekannt, bei der jede Leuchtdiode über jeweils zwei elektrische Leitungen mit einer Spannungsquelle verbunden ist. Für jede Leuchtdiode weist die Beleuchtungsvorrichtung eine Halterung auf, welche eine Leuchtdiode an einer gewünschten Stelle der Beleuchtungsvorrichtung hält. Des Weiteren weist die Beleuchtungsvorrichtung eine Vielzahl von Kabelführungen auf, welche verhindern, dass die elektrischen Leitungen zu nahe an den Leuchtdioden verlaufen oder diese berühren, was zu einem Kabeldefekt durch Überhitzung oder einer Abdeckung der Strahlungsfläche der Leuchtdioden führen kann. Nachteilig bei der bekannten Beleuchtungsvorrichtung ist, dass der Aufwand für ihre Herstellung relativ groß ist, da die Leuchtdioden und Kabel von Hand in die Beleuchtungsvorrichtung eingebaut bzw. mit den Halterungen verbunden werden müssen und eine automatisierte Herstellung nicht möglich ist.

Diese bekannte Beleuchtungsvorrichtung wird in Flugzeugkabinen zur Erzeugung eines künstlichen Sternenhimmels eingesetzt. Dabei wird der künstliche Sternenhimmel durch die an einem Innenausstattungspaneel befestigte Beleuchtungsvorrichtung mit mehreren Hundert Leuchtdioden simuliert. Zur Herstellung einer solchen Beleuchtungsvorrichtung müssen die mehreren Hundert Leuchtdioden mit den zugehörigen Kupferkabeln von Hand befestigt bzw. verlegt werden. Dies erfordert einen hohen Zeitaufwand. Darüber hinaus ergibt sich aus der manuellen Fertigung ein hohes Fehlerpotential (beispielsweise bei der Bestimmung der Kabellängen und der Herstellung der elektrischen Verbindungen zwischen den Kabeln und den Leuchtdioden), so dass häufig Nachbearbeitungen notwendig sind.

Darüber hinaus weist die bekannte Beleuchtungsvorrichtung aufgrund der hohen Anzahl verwendeter Komponenten wie Leuchtdioden, Kupferkabel, Halterungen und Kabelführungen ein relativ hohes Gewicht auf. Insbesondere führt die hohe Anzahl elektrischer Kupferkabel zu einer Gewichtserhöhung. Des Weiteren hat die bekannte Beleuchtungsvorrichtung bedingt durch die Größe der Leuchtdioden mit an deren Anschlussbeinchen angelöteten Kabeln einen relativ hohen Platzbedarf, so dass sich beim Einsatz der bekannten Beleuchtungsvorrichtung zur Erzeugung eines künstlichen Sternenhimmels in einer Flugzeugkabine die Kabinenhöhe verringert.

Es sind ferner Elektrolumineszenz-Folien bekannt, bei denen eine aus einem elektrolumineszentem Material bestehende Lage durch ein von zwei Elektrodenlagen erzeugtes elektrisches Wechselfeld zur Emittierung von Lichtstrahlung angeregt wird. Bei den Elektrolumineszenz-Folien weisen die Lage aus elektrolumineszentem Material und die Elektrolagen die gleichen Abmessungen auf und sind deckungsgleich übereinander angeordnet, so dass eine Elektrolumineszenz-Folie eine flächige Lichtquelle bereitstellt. Elektrolumineszenz-Folien sind flexibel, können aber nur auf einfache dreidimensionale Körper, wie z.B. einen Kreiszylinder, aufgebracht werden. Eine Aufbringung auf komplexere dreidimensionale Körper, wie z.B. eine Kugel, ist nicht möglich. Darüber hinaus weisen Elektrolumineszenz-Folien eine relativ hohe Dicke und ein relativ hohes Gewicht auf, was deren Einsatz insbesondere im Flugzeugkabinenbau unattraktiv macht.

Die Druckschrift US 4,777,402 offenbart ein Dünnfilmelektrolumineszenzelement mit einem Substrat, einem transparenten leitenden Film, einem isolierenden Film, einem ersten elektrolumineszierenden Film, einem isolierenden Film, zwei in einer Ebene angeordnete Elektroden, einem isolierenden Film, einem zweiten elektrolumineszierenden Film, einem isolierenden Film, einer Elektrode, und einer Passivierungschicht.

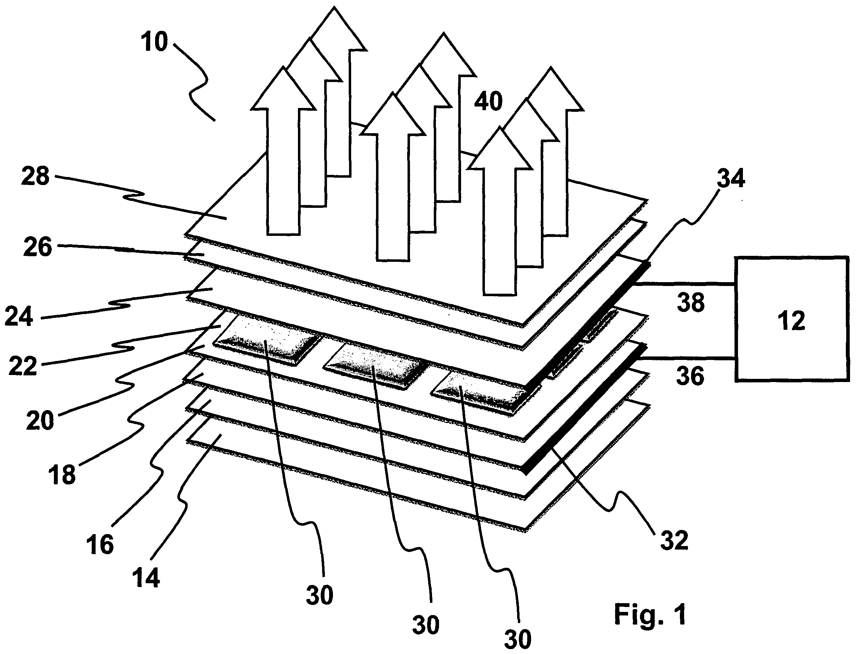

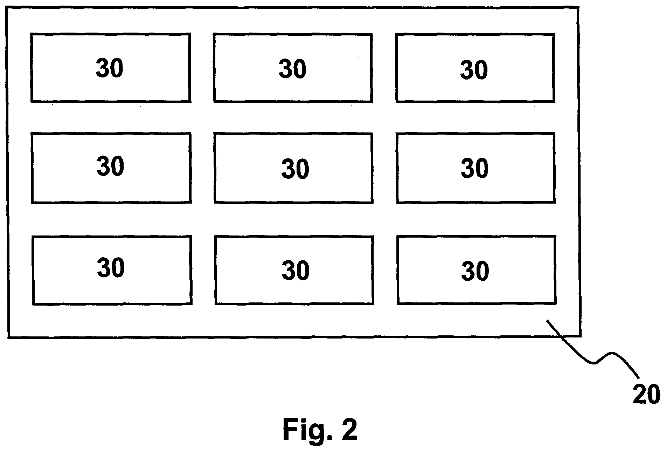

Die Druckschrift CN 200 980 404 Y offenbart eine Schultasche mit mehreren räumlich getrennten elektrolumineszierenden Elementen. Wie aus der Figur 1 ersichtlich ist, umfasst die auf der Schultasche aufgebrachte Schichtstruktur jedoch nur eine zwischen zwei Elektroden angeordnete elektrolumineszierende Schicht. Ferner offenbart diese Druckschrift in den Figuren 2 bis 4 mehrere in einer Ebene auf einer Schultasche aufgebrachte elektrolumineszierende Elemente. Die elektrolumineszierenden Elemente grenzen aneinander.

Die Druckschrift US 2008/0246389 betrifft eine elektrolumineszierende Anzeigevorrichtung mit verschiedenen Phosphorelementen, die unterschiedliche Farben emittieren. Wie aus den Figuren 8, 9 und 19A bis 19F in Zusammenschau mit den Absätzen [0047] und [0060] bis [0063] dieser Druckschrift ersichtlich ist, sind die Phosphorelemente in
einer Schichtebene angeordnet. In dieser Schichtebene liegen die Phosphorelemente seitlich aneinander.

Die Erfindung ist auf die Aufgabe gerichtet, eine Beleuchtungsvorrichtung mit einer Mehrzahl von Lichtquellen bereitzustellen, die einfach hergestellt werden kann, ein geringes Gewicht aufweist, platzsparend ist und einfach auf komplexe dreidimensionale Körper aufgebracht werden kann.

Zur Lösung dieser Aufgabe wird eine Beleuchtungsvorrichtung mit den Merkmalen des Anspruchs 1 bereitgestellt.

Die erfindungsgemäße Beleuchtungsvorrichtung zeichnet sich dadurch aus, dass die Mehrzahl von Lichtquellen über nur zwei als Elektroden wirkende, elektrisch leitende Schichten mit elektrischer Energie versorgt werden. Bei den elektrisch leitenden Schichten kann es sich um eine Rückelektrode und eine Frontelektrode handeln. Zur Erzeugung des elektrischen Wechselfeldes müssen nur die erste und die zweite elektrisch leitende Schicht mit einer Wechselspannungsquelle verbunden werden. Da jede Lichtquelle nicht einzeln über zugehörige Kabel mit einer Spannungsquelle verbunden werden muss, verringert sich der Herstellungsaufwand deutlich. Durch Vermeidung einer Vielzahl von Kabeln wird ferner eine signifikante Gewichtsreduktion erreicht. Durch den Aufbau der Beleuchtungsvorrichtung in mehreren übereinander angeordneten Schichten wird eine platzsparende Anordnung ermöglicht. Des Weiteren ist bedingt durch die Schichtstruktur eine maschinelle Herstellung der erfindungsgemäßen Beleuchtungsvorrichtung, insbesondere mit großen Flächen von z.B. mehreren Quadratmetern, möglich. Die Schichtstruktur der erfindungsgemäßen Beleuchtungsvorrichtung kann auch auf jeden beliebigen Träger aufgebracht werden.

Bei der ersten und zweiten elektrisch leitenden Schicht kann es sich beispielsweise um Schichten aus einem elektrisch leitfähigen Kunststoff und/oder Schichten enthaltend Silber, Aluminium, Indiumoxid oder Indiumzinnoxid handeln. Bei dem elektrolumineszenten Material kann es sich beispielsweise um Zinksulfid handeln, welches mit verschiedenen Metallen wie Gold, Silber, Kobalt, Gallium oder Mangan dotiert ist. Durch die Stärke und Zusammensetzung der Dotierung kann die Farbe der von dem elektrolumineszenten Material emittierten Lichtstrahlung verändert werden. Bei der elektrisch isolierenden Schicht kann es sich um ein Material mit einer hohen Dielektrizitätskonstante handeln, wodurch der Wirkungsgrad der Beleuchtungsvorrichtung verbessert werden kann. Insbesondere kann es sich bei den Schichten der Beleuchtungsvorrichtung um hydrophobe Schichten handeln, um das elektrolumineszente Material vor Feuchtigkeitseinflüssen zu schützen. Dadurch kann die Lebensdauer der Beleuchtungsvorrichtung erhöht werden.

Zur Vermeidung eines Eindringens von Feuchtigkeit in das elektrolumineszente Material können eine erste und eine zweite feuchtigkeitsundurchlässige Schicht vorgesehen sein, zwischen denen die Leuchtschicht liegt. Insbesondere kann die erste feuchtigkeitsundurchlässige Schicht zwischen der zweiten elektrisch leitenden Schicht und der Leuchtschicht und die zweite feuchtigkeitsundurchlässige Schicht zwischen der ersten elektrisch leitenden Schicht und der elektrisch isolierenden Schicht liegen. Bei den feuchtigkeitsundurchlässigen Schichten kann es sich beispielsweise um Schichten aus Aluminiumoxid mit einer Dicke von ungefähr 2 µm handeln. Alternativ oder zusätzlich es ist es zur Erhöhung der Lebensdauer der Beleuchtungsvorrichtung möglich, als elektrolumineszentes Material einen mikrogekapselten Leuchtstoff zu verwenden, bei dem die einzelnen Leuchtstoffteilchen mit einer dünnen Aluminiumoxidschicht gekapselt sind.

Um Lichtstrahlung mit einer hohen Lichtstärke in eine gewünschte Richtung bereitzustellen, kann die elektrisch isolierende Schicht Licht-reflektierende Eigenschaften aufweisen. Dadurch kann von dem elektrolumineszenten Material in eine nicht gewünschte Richtung emittierte Lichtstrahlung in eine gewünschte Hauptstrahlungsrichtung reflektiert werden. Für einen geringen Verlust an Lichtstrahlung kann die elektrisch isolierende Schicht einen hohen Reflexionsgrad aufweisen.

Damit die Schichten der Beleuchtungsvorrichtung vor äußeren Einflüssen geschützt sind, ohne die Lichtstrahlung wesentlich zu schwächen, kann eine transparente Schutzschicht auf der von der Leuchtschicht abgewandten Seite der Beleuchtungsvorrichtung angeordnet sein. Insbesondere kann die transparente Schutzschicht auf der von der Leuchtschicht abgewandten Seite der zweiten elektrisch leitenden Schicht oder der zweiten feuchtigkeitsundurchlässigen Schicht angeordnet sein.

Zur einfachen Herstellung der Beleuchtungsvorrichtung kann es sich bei den Schichten der Beleuchtungsvorrichtung um getrocknete Lack- und/oder Flüssigkeitsschichten handeln. Insbesondere können die Schichten zumindest teilweise nacheinander aufgesprüht und/oder aufgedruckt werden, was eine maschinelle Herstellung (insbesondere von großflächigen Beleuchtungsvorrichtungen) ermöglicht.

Vorzugsweise ist wenigstens eine der Schichten der Beleuchtungsvorrichtung unflexibel und die Schichten weisen eine teilweise gebogene, dreidimensionale Form auf. Insbesondere können die Schichten auf dreidimensionale Körper mit einer komplexen dreidimensionalen Struktur (beispielsweise eine Kugel oder einen Hyperboloid) aufgebracht werden. Beispielsweise können die Schichten der Beleuchtungsvorrichtung aufgesprüht, aufgestrichen oder aufgedruckt werden. Dadurch kann die Beleuchtungsvorrichtung genau an die Form eines Trägers angepasst werden, was zu einer zusätzlichen Raumeinsparung führt.

Gemäß einer bevorzugten Ausführungsform liegt die Dicke der Leuchtschicht in einem Bereich von 15 µm bis 25 µm und beträgt insbesondere 20 µm. Bei diesen Schichtdicken der Leuchtschicht können gute Lichtstärken bei niedrigem Gewicht bzw. Raumbedarf erreicht werden.

Gemäß einer weiter bevorzugten Ausführungsform liegt die Dicke der elektrisch isolierenden Schicht in einem Bereich von 11 µm bis 21 µm und beträgt insbesondere 16 µm. Insbesondere wenn die elektrisch isolierende Schicht an der Leuchtschicht anliegt, liefern diese Schichtdicken gute Lichtstärken bei niedrigem Gewicht bzw. Raumbedarf.

Damit die emittierte Lichtstrahlung eine hohe Lichtstärke aufweist, kann die zweite elektrisch leitende Schicht näher bei der Leuchtschicht als bei der elektrisch isolierenden Schicht liegen, zumindest teilweise transparent sein und eine Dicke in einem Bereich von 1 µm bis 9 µm, insbesondere in einem Bereich von 2 µm bis 4 µm, aufweisen. Bei diesen Schichtdicken der zweiten elektrisch leitenden Schicht und bedingt durch deren zumindest teilweise transparente Ausbildung ergibt sich an der zweiten elektrisch leitenden Schicht eine nur geringe Absorption der Lichtstrahlung. Dadurch kann der Wirkungsgrad der Beleuchtungsvorrichtung weiter erhöht werden.

Zur Erzeugung eines stabilen elektrischen Wechselfelds kann die erste elektrisch leitende Schicht näher bei der elektrisch isolierenden Schicht als bei der Leuchtschicht angeordnet sein und eine Dicke in einem Bereich von 11 µm bis 20 µm aufweisen. Vorzugsweise beträgt die Dicke der ersten elektrisch leitenden Schicht 15 µm.

Um mit im Wesentlichen gleichen Lichtstärken leuchtende Lichtquellen bereitzustellen, können die räumlich getrennten Bereiche der Leuchtschicht überlappungsfrei angeordnet sein. Alternativ können die räumlich getrennten Bereiche auch zumindest teilweise überlappend in der Leuchtschicht angeordnet sein.

Die räumlich getrennten Bereiche können die gleiche Größe aufweisen. Alternativ ist auch denkbar, dass die räumlich getrennten Bereiche unterschiedliche Größen aufweisen. Insbesondere können die räumlich getrennten Bereiche irregulär angeordnet sein. Dabei können die räumlich getrennten Bereiche zueinander jeweils unterschiedliche Abstände aufweisen. Gemäß einer bevorzugten Ausführungsform können die räumlich getrennten Bereiche jeweils eine Kreisform mit einem Durchmesser in einem Bereich von 0,5 mm bis 5 mm, insbesondere 1 mm, aufweisen. Eine solche Ausführungsform kann vorteilhaft zur Erzeugung eines künstlichen Sternenhimmels verwendet werden.

Zur Bereitstellung einer im Wesentlichen homogenen Strahlungsverteilung der Beleuchtungsvorrichtung können die räumlich getrennten Bereichen auf Eckpunkten einer regulären Parkettierung liegen. Die reguläre Parkettierung kann beispielsweise aus gleichseitigen Dreiecken, Quadraten oder regelmäßigen Sechsecken bestehen. Falls die Schichtstruktur der Beleuchtungsvorrichtung eine dreidimensionale Form aufweist, kann die reguläre Parkettierung auch auf die dreidimensionale Form projiziert sein.

Die Erfindung betrifft ferner ein Innenausstattungspaneel für eine Flugzeugkabine mit einer erfindungsgemäßen Beleuchtungsvorrichtung. Insbesondere kann die Beleuchtungsvorrichtung zur Erzeugung eines künstlichen Sternenhimmels verwendet werden.

Bevorzugte Ausführungsbeispiele der vorliegenden Erfindung werden nun anhand der beigefügten schematischen Figuren näher erläutert, von denen:
- Figur 1: eine perspektivische Explosionsansicht eines ersten Beispiels einer Beleuchtungsvorrichtung zeigt, welches das Verständnis der Erfindung erleichtert;
- Figur 2: eine Ansicht von oben eines ersten Ausführungsbeispiels einer elektrisch isolierenden Schicht mit darauf aufgebrachtem elektrolumineszentem Material zeigt;
- Figur 3: eine Ansicht von oben eines zweiten Ausführungsbeispiels einer elektrisch isolierenden Schicht mit darauf aufgebrachtem elektrolumineszentem Material zeigt; und
- Figur 4: eine perspektivische Explosionsansicht eines ersten Ausführungsbeispiels einer erfindungsgemäßen Beleuchtungsvorrichtung zeigt.

Die Figur 1 zeigt schematisch eine perspektivische Explosionsansicht einer Beleuchtungsvorrichtung 10 und einer Wechselspannungsquelle 12. Die Beleuchtungsvorrichtung 10 besteht aus einer Schichtstruktur mit einer Mehrzahl übereinander angeordneter Schichten. Die Beleuchtungsvorrichtung 10 umfasst (in der Figur 1 von unten nach oben) eine erste Schutzschicht 14, eine erste feuchtigkeitsundurchlässige Schicht 16, eine als Rückelektrode ausgebildete erste elektrisch leitende Schicht 18, eine elektrisch isolierende Schicht 20, eine Leuchtschicht 22, eine als Frontelektrode ausgebildete zweite elektrisch leitende Schicht 24, eine zweite feuchtigkeitsundurchlässige Schicht 26 und eine zweite Schutzschicht 28.

In der Leuchtschicht 22 sind eine Mehrzahl von Bereichen 30 aus einem elektrolumineszentem Lack räumlich voneinander getrennt in einer Ebene angeordnet. Der elektrolumineszente Lack enthält Zinksulfid. Die mehreren Bereiche 30 weisen jeweils eine Rechteckform auf. Die erste Schutzschicht 14 kann auf einen Träger, beispielsweise einem Innenausstattungspaneel einer Flugzeugkabine (nicht gezeigt), aufgebracht sein. Zwischen der ersten Schutzschicht 14 und dem Innenausstattungspaneel kann ferner eine Grundierungsschicht (nicht gezeigt) angeordnet sein. Insbesondere kann das Innenausstattungspaneel eine beliebige dreidimensionale Form aufweisen, wobei die Schichten der Beleuchtungsvorrichtung 10 die gleiche dreidimensionale Form wie das Innenausstattungspaneel aufweisen. Eine Seite der zweiten Schutzschicht 28 ist dem Innenraum der Flugzeugkabine zugewandt.

Die erste 14 und die zweite 28 Schutzschicht bestehen aus einem Kunststoffmaterial, das die dazwischen liegenden Schichten 16 bis 26 vor Beschädigungen schützt, wobei die zweite Schutzschicht 28 aus einem transparenten Material besteht. Die erste 16 und die zweite 26 feuchtigkeitsundurchlässige Schicht bestehen aus Aluminiumoxid und verhindern ein Eindringen von Feuchtigkeit in die dazwischen liegenden Schichten 18 bis 24. Die zweite feuchtigkeitsundurchlässige Schicht 26 ist ebenfalls transparent ausgebildet. Durch die Verhinderung eines Eindringens von Feuchtigkeit in die Leuchtschicht 22 wird die Lebensdauer der Beleuchtungsvorrichtung 10 erhöht. Eine weitere Erhöhung der Lebensdauer der Beleuchtungsvorrichtung 10 kann durch Abfuhr von Wärme von der Beleuchtungsvorrichtung 10 erreicht werden. Dazu kann die Beleuchtungsvorrichtung 10 zwischen dem Innenausstattungspaneel und der Leuchtschicht 22 eine Wärme-ableitende Schicht (nicht gezeigt) aufweisen. Bei der Wärme-ableitenden Schicht kann es sich um eine Wärmeleitpaste handeln.

Bei der ersten elektrisch leitenden Schicht 18 handelt es sich um eine Silberschicht und bei der zweiten elektrisch leitenden Schicht 24 handelt es sich eine Schicht aus einem intrinsisch leitfähigen Polymer. Alternativ kann es ich bei der zweiten elektrisch leitenden Schicht 24 auch um eine transparente Kunststoffschicht handeln, die einen Metallanteil aufweist. Auf der elektrisch isolierenden Schicht 20 ist die Leuchtschicht 22 aufgebracht. Die elektrisch isolierende Schicht 20 hat neben elektrisch isolierenden Eigenschaften auch Licht-reflektierende Eigenschaften. Insbesondere besteht die elektrisch isolierende Schicht 20 aus einem Material mit einer hohen Dielektrizitätskonstante und einem hohen Reflexionsgrad.

An der ersten elektrisch leitenden Schicht 18 ist eine erste Anschlussfahne 32 und an der zweiten elektrisch leitenden Schicht 24 ist eine zweite Anschlussfahne 34 angebracht. Zur Erzeugung eines elektrischen Wechselfelds zwischen der ersten 18 und der zweiten 24 elektrisch leitenden Schicht ist die Wechselspannungsquelle 12 über zwei Kabel 36 und 38 mit der ersten 32 und zweiten 34 Anschlussfahne verbunden. Die Wechselspannungsquelle 12 erzeugt eine Wechselspannung in einem Bereich von 30 bis 250 V mit einer Frequenz in einem Bereich von 50 bis 2000 Hz. Andere Spannungs- und Frequenzbereiche sind denkbar. Durch das elektrische Wechselfeld wird das elektrolumineszente Material 30 zur Emission von elektromagnetischer Strahlung in Form von Lichtstrahlung 40 angeregt. In Richtung der elektrisch isolierenden Schicht 20 emittiertes Licht wird von dieser reflektiert und als Lichtstrahlung 40 in den Innenraum der Flugzeugkabine abstrahlt. Durch die Anregung der Leuchtschicht 22 mit dem elektrischen Wechselfeld wirkt jeder der räumlich getrennten Bereiche 30 als eine Lichtquelle. Folglich können mit Hilfe von zwei Elektroden 18 und 24 und zwei Anschlussleitungen 36 und 38 eine Mehrzahl von Lichtquellen mit Energie versorgt werden.

Nachfolgend wird beispielhaft ein Herstellungsverfahren zum Herstellen der in der Figur 1 gezeigten Beleuchtungsvorrichtung 10 beschrieben. Insbesondere kann das Herstellungsverfahren von einem programmierten Lackierroboter mit einem Sprühkopf ausgeführt werden.

Zuerst wird eine Grundierungsschicht auf einen Träger, beispielsweise ein Innenausstattungspaneel, aufgesprüht. Nach dem Trocknen bzw. Aushärten der Grundierungsschicht wird die erste Schutzschicht 14 auf die Grundierungsschicht aufgesprüht. Nach dem Trocknen der ersten Schutzschicht 14 erfolgt nacheinander ein jeweiliges Aufsprühen und Trocknen der ersten feuchtigkeitsundurchlässigen Schicht 16, der ersten elektrisch leitenden Schicht 18 und der elektrisch isolierenden Schicht 20.

Ein anschließendes Aufsprühen der Bereiche 30 aus elektrolumineszentem Material auf die elektrisch isolierende Schicht 20 erfolgt mit Hilfe einer Maske (nicht gezeigt), in der den Bereichen 30 entsprechende Aussparungen ausgebildet sind. Das elektrolumineszente Material wird folglich nur in den Bereichen 30 auf die elektrisch isolierenden Schicht 20 gesprüht. Alternativ können die Bereiche 30 mit elektrolumineszentem Material auch ohne eine Maske einzeln aufgesprüht, aufgedruckt oder aufgestrichen werden.

Nach dem Trocknen des elektrolumineszenten Materials 30 erfolgt nacheinander ein Aufbringen und Trocknen der zweiten elektrisch leitenden Schicht 24, der zweiten feuchtigkeitsundurchlässigen Schicht 26 und der zweiten Schutzschicht 28. Zusätzliche Schichten können zwischen den Schichten 14 bis 28 aufgesprüht werden. Zum Schluss werden die Anschlussfahnen 32 und 34 an den elektrisch leitenden Schichten 18 und 24 angebracht.

Da die aufgesprühten Schichten relativ dünn sind, ist auch der Raumbedarf der Schichtstruktur gering. Ferner weist die aufgesprühte Schichtstruktur ein geringes Gewicht auf und kann auf großen Flächen, insbesondere großen Flächen mit einer komplexen dreidimensionalen Struktur, maschinell aufgesprüht werden. Nach dem Aushärten der aufgesprühten Schichten weist die Beleuchtungsvorrichtung 10 eine hohe Stabilität auf.

Die Figur 2 zeigt eine Ansicht von oben eines ersten Ausführungsbeispiels einer elektrisch isolierenden Schicht 20 mit darauf aufgebrachten Bereichen 30 aus einem elektrolumineszentem Material. Die Schichten der Figur 2 können in der in der Figur 1 gezeigten Beleuchtungsvorrichtung 10 verwendet werden. Die Bereiche 30 weisen jeweils die gleiche Rechteckform auf, so dass sechs gleich große Lichtquellen bereitgestellt sind. Dadurch wird eine im Wesentlichen gleichmäßig abgestrahlte Lichtverteilung erreicht.

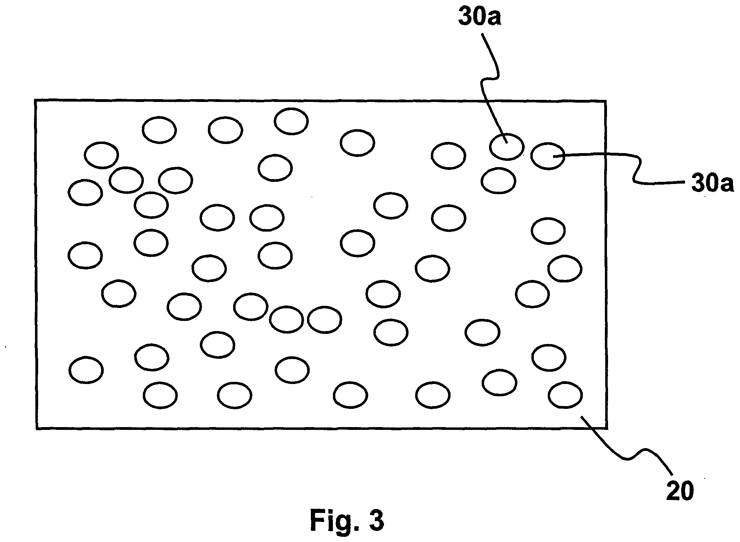

Die Figur 3 zeigt eine Ansicht von oben eines zweiten Ausführungsbeispiels einer elektrisch isolierenden Schicht 20 mit darauf aufgebrachten Bereichen 30a aus einem elektrolumineszenten Material. Die Schichten der Figur 3 können in der in der Figur 1 gezeigten Beleuchtungsvorrichtung 10 verwendet werden. Die Bereiche aus elektrolumineszentem Material 30a weisen Kreisformen auf und haben einen Durchmesser in einem Bereich von 0,5 mm bis 5 mm. Kleinere Durchmesser sind denkbar. Die Bereiche 30a sind irregulär auf der elektrisch isolierenden Schicht 20 angeordnet, d.h. die Bereiche 30a weisen zueinander jeweils unterschiedliche Abstände auf. Durch diese Anordnung der Bereiche 30a auf der elektrisch isolierenden Schicht 20 kann ein künstlicher Sternenhimmel erzeugt werden. Insbesondere können mehrere hundert Bereiche 30a auf der elektrisch isolierenden Schicht 20 aufgebracht werden.

Es ist auch denkbar, dass die in der Figur 3 gezeigten Bereiche 30a unterschiedliche Durchmesser aufweisen und/oder es sich um Bereiche mit unterschiedlichen geometrischen Formen handelt. Die Bereiche 30a können grundsätzlich jede geometrische Form aufweisen, so dass beispielsweise leuchtende Schriftzüge, Anzeigen oder Griffe hergestellt werden können.

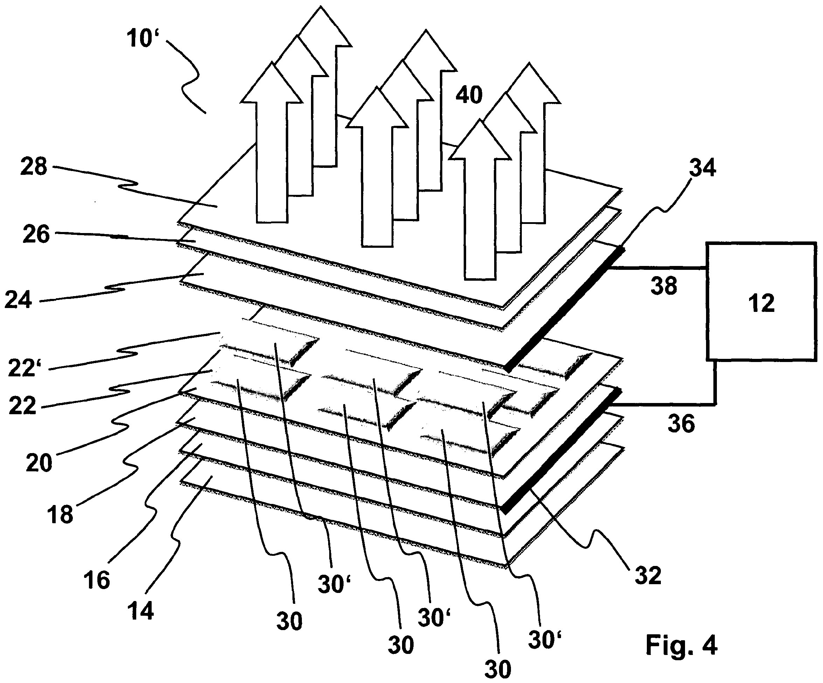

Die Figur 4 zeigt schematisch eine perspektivische Explosionsansicht einer Beleuchtungsvorrichtung 10' und einer Wechselspannungsquelle 12. Die Beleuchtungsvorrichtung 10' der Figur 4 entspricht der Beleuchtungsvorrichtung 10 der Figur 1, mit dem Unterschied, dass eine zusätzliche Leuchtschicht 22' über der Leuchtschicht 22 vorgesehen ist. Die Leuchtschicht 22' entspricht der Leuchtschicht 22. Wie in der Leuchtschicht 22 sind in der zusätzlichen Leuchtschicht 22' eine Mehrzahl von Bereichen 30' aus einem elektrolumineszentem Lack räumlich voneinander getrennt in einer Ebene angeordnet. Insbesondere ist die Leuchtschicht 22' auf der Leuchtschicht 22 aufgebracht. Beispielsweise wurde nach dem Aufbringen bzw. Aussprühen und Trocknen der Leuchtschicht 22 die Leuchtschicht 22' auf die Leuchtschicht 22 gebracht bzw. gesprüht. Die Bereiche 30' und 30 können überlappend und/oder überlappungsfrei angeordnet sein. Es ist auch denkbar, dass weitere Leuchtschichten über der Leuchtschicht 22' vorgesehen sind.

Durch die Anordnung des elektrolumineszenten Materials 30, 30' in unterschiedlichen Ebenen kann auf einfache Weise eine Beleuchtungsvorrichtung 10' mit unterschiedlichen Lichtintensitäten bereitgestellt werden. So erscheint für den Betrachter näher bei der Lichtaustrittsfläche der Beleuchtungsvorrichtung 10' angeordnetes elektrolumineszentes Material 30' heller als weiter von der Lichtaustrittsfläche der Beleuchtungsvorrichtung 10' entfernt angeordnetes elektrolumineszentes Material 30. Folglich ist es möglich, mit nur einer Beleuchtungsvorrichtung 10' unterschiedliche Beleuchtungsstärken zu realisieren. Bei dem Einsatz der Beleuchtungsvorrichtung 10' zur Erzeugung eines künstlichen Sternenhimmels können mit Hilfe der Bereiche 30' und 30 insbesondere vom Betrachter weiter entfernte und wenig weit entfernte Sterne dargestellt werden.

## Patentansprüche

1. Beleuchtungsvorrichtung (10') mit einer Mehrzahl von Lichtquellen, wobei die Beleuchtungsvorrichtung (10') mehrere übereinander angeordnete Schichten umfasst, mit
- einer ersten (18) und einer zweiten (24) elektrisch leitenden Schicht, die dazu ausgebildet sind, zwischen sich ein elektrisches Wechselfeld zu erzeugen,
- einer Wechselspannungsquelle (12),
- einer elektrisch isolierenden Schicht (20) zwischen der ersten und der zweiten elektrisch leitenden Schicht (18, 24), wobei
- die Wechselspannungsquelle (12) über zwei Anschlussleitungen (36, 38) direkt mit der ersten (18) und der zweiten (24) elektrisch leitenden Schicht verbunden ist,
**gekennzeichnet durch**
- eine erste Leuchtschicht (22) zwischen der ersten und der zweiten elektrisch leitenden Schicht (18, 24), wobei sich die erste Leuchtschicht (22) entlang der ersten und der zweiten elektrisch leitenden Schicht (18, 24) erstreckt,
- eine zweite Leuchtschicht (22') zwischen der ersten und der zweiten elektrisch leitenden Schichte (18, 24), wobei sich die zweite Leuchtschicht (22') entlang der ersten und der zweiten elektrisch leitenden Schicht (18, 24) erstreckt, wobei
- in der ersten (22) und zweiten (22') Leuchtschicht jeweils elektrolumineszentes Material in mehreren benachbarten, räumlich getrennten und voneinander beabstandeten Bereichen (30, 30'; 30a) angeordnet ist, von denen jeder eine Lichtquelle bildet,
- die zweite Leuchtschicht (22') auf der ersten Leuchtschicht (22) aufgebracht ist und
- die räumlich getrennten Bereiche (30, 30'; 30a) in unterschiedlichen Ebenen in der ersten (22) und zweiten (22') Leuchtschicht angeordnet sind.

2. Beleuchtungsvorrichtung (10') nach Anspruch 1,
ferner mit einer ersten (16) und einer zweiten (26) feuchtigkeitsundurchlässigen Schicht, zwischen denen die Leuchtschichten (22, 22') liegen.

3. Beleuchtungsvorrichtung (10') nach einem der vorhergehenden Ansprüche, bei der die elektrisch isolierende Schicht (20) Licht-reflektierende Eigenschaften aufweist.

4. Beleuchtungsvorrichtung (10') nach einem der vorhergehenden Ansprüche, ferner mit einer transparenten Schutzschicht (28) auf der von den Leuchtschichten (22, 22') abgewandten Seite der Beleuchtungsvorrichtung (10').

5. Beleuchtungsvorrichtung (10') nach einem der vorhergehenden Ansprüche, bei der die Schichten (18, 20, 22, 22', 24, 28) getrocknete Lack- und/oder Flüssigkeitsschichten sind.

6. Beleuchtungsvorrichtung (10') nach einem der vorhergehenden Ansprüche, bei der wenigstens eine der Schichten (18, 20, 22, 22', 24, 28) unflexibel ist und die Schichten (18, 20, 20', 22, 24, 28) eine zumindest teilweise gebogene dreidimensionale Form aufweisen.

7. Beleuchtungsvorrichtung (10') nach einem der vorhergehenden Ansprüche, bei der die Dicke der Leuchtschichten (22, 22') in einem Bereich von 15 µm bis 25 µm liegt und insbesondere 20 µm beträgt.

8. Beleuchtungsvorrichtung (10') nach einem der vorhergehenden Ansprüche, bei der die Dicke der elektrisch isolierenden Schicht (20) in einem Bereich von 11 µm bis 21 µm liegt und insbesondere 16 µm beträgt.

9. Beleuchtungsvorrichtung (10') nach einem der vorhergehenden Ansprüche, bei der die zweite elektrisch leitende Schicht (24) näher bei den Leuchtschichten (22, 22') als bei der elektrisch isolierenden Schicht (20) liegt, zumindest teilweise transparent ist und eine Dicke in einem Bereich von 1 µm bis 9 µm, insbesondere in einem Bereich von 2 µm bis 4 µm aufweist.

10. Beleuchtungsvorrichtung (10') nach einem der vorhergehenden Ansprüche, bei der die erste elektrisch leitende Schicht (18) näher bei der elektrisch isolierenden Schicht (20) als bei den Leuchtschichten (22, 22') liegt und eine Dicke in einem Bereich von 11 µm bis 20 µm, insbesondere 15 µm aufweist.

11. Beleuchtungsvorrichtung (10') nach einem der vorhergehenden Ansprüche, bei der die räumlich getrennten. Bereiche (30, 30'; 30a) der Leuchtschichten (22, 22') überlappungsfrei angeordnet sind.

12. Beleuchtungsvorrichtung (10') nach einem der vorhergehenden Ansprüche, bei der die räumlich getrennten Bereiche (30, 30'; 30a) die gleiche Größe aufweisen.

13. Beleuchtungsvorrichtung (10') nach einem der Ansprüche 1 bis 11,
bei der die räumlich getrennten Bereiche (30, 30'; 30a) unterschiedliche Größen aufweisen.

14. Beleuchtungsvorrichtung (10') nach einem der vorhergehenden Ansprüche, bei der die räumlich getrennten Bereiche (30, 30'; 30a) irregulär angeordnet sind.

15. Innenausstattungspaneel für eine Flugzeugkabine,
mit einer Beleuchtungsvorrichtung (10') nach einem der vorhergehenden Ansprüche.

## Claims

1. A lighting device (10') having a plurality of light sources, wherein the lighting device (10') comprises multiple superposed layers, having
- a first electrically conductive layer (18) and a second electrically conductive layer (24) that are designed for generating an alternating electrical field between them,
- an alternating voltage source (12),
- an electrically insulating layer (20) between the first and second electrically conductive layers (18, 24), wherein
- the alternating voltage source (12) is directly connected to the first electrically conductive layer (18) and the second electrically conductive layer (24) via two connecting lines (36, 38),
**characterized by**
- a first luminescent layer (22) between the first and second electrically conductive layers (18, 24), the first luminescent layer (22) extending along the first and second electrically conductive layers (18, 24),
- a second luminescent layer (22') between the first and second electrically conductive layers (18, 24), the second luminescent layer (22') extending along the first and second electrically conductive layers (18, 24), wherein
- electroluminescent material is situated in both the first luminescent layer (22) and the second luminescent layer (22') in multiple spatially separate, spaced-apart regions (30, 30'; 30a), each of which forms a light source,
- the second luminescent layer (22') is applied to the first luminescent layer (22), and
- the spatially separate regions (30, 30'; 30a) are situated in different planes in the first luminescent layer (22) and the second luminescent layer (22').

2. The lighting device (10') according to Claim 1,
additionally having a first moisture-impermeable layer (16) and a second moisture-impermeable layer (26), between which the luminescent layers (22, 22') are situated.

3. The lighting device (10') according to one of the preceding claims,
in which the electrically insulating layer (20) has light-reflecting properties.

4. The lighting device (10') according to one of the preceding claims,
additionally having a transparent protective layer (28) on the side of the lighting device (10') facing away from the luminescent layers (22, 22').

5. The lighting device (10') according to one of the preceding claims,
in which the layers (18, 20, 22, 24, 28) are dried lacquer and/or liquid layers.

6. The lighting device (10') according to one of the preceding claims,
in which at least one of the layers (18, 20, 22, 22', 24, 28) is inflexible, and the layers (18, 20, 20', 22, 24, 28) have an at least partially curved three-dimensional shape.

7. The lighting device (10') according to one of the preceding claims,
in which the thickness of the luminescent layers (22, 22') is in a range of 15 µm to 25 µm, and in particular is 20 µm.

8. The lighting device (10') according to one of the preceding claims,
in which the thickness of the electrically insulating layer (20) is in a range of 11 µm to 21 µm, and in particular is 16 µm.

9. The lighting device (10') according to one of the preceding claims,
in which the second electrically conductive layer (24) is closer to the luminescent layers (22, 22') than to the electrically insulating layer (20), is at least partly transparent, and has a thickness in a range of 1 µm to 9 µm, in particular in a range of 2 µm to 4 µm.

10. The lighting device (10') according to one of the preceding claims,
in which the first electrically conductive layer (18) is closer to the electrically insulating layer (20) than to the luminescent layers (22, 22'), and has a thickness in a range of 11 µm to 20 µm, in particular 15 µm.

11. The lighting device (10') according to one of the preceding claims,
in which the spatially separate regions (30, 30'; 30a) of the luminescent layers (22, 22') are situated so that they do not overlap.

12. The lighting device (10') according to one of the preceding claims,
in which the spatially separate regions (30, 30'; 30a) have the same size.

13. The lighting device (10') according to one of Claims 1 to 11,
in which the spatially separate regions (30, 30'; 30a) have different sizes.

14. The lighting device (10') according to one of the preceding claims,
in which the spatially separate regions (30, 30'; 30a) are arranged irregularly.

15. An interior trim panel for an aircraft cabin,
having a lighting device (10') according to one of the preceding claims.

## Revendications

1. Dispositif d'éclairage (10') équipé d'une pluralité de sources de lumière, le dispositif d'éclairage (10') comprenant plusieurs couches superposées, comprenant
- une première couche électriquement conductrice (18) et une seconde couche électriquement conductrice (24) qui sont conçues par générer un champ électrique alternatif entre elles,
- une source de tension alternative (12),
- une couche électriquement isolante (20) disposée entre les première et seconde couches électriquement conductrices (18, 24),
- la source de tension alternative (12) étant reliée directement à la première couche électriquement conductrice (18) et à la seconde couche électriquement conductrice (24) par l'intermédiaire de deux lignes de liaison (36, 38),
**caractérisé par**
- un première couche luminescente (22) disposée entre les première et seconde couches électriquement conductrices (18, 24), la première couche luminescente (22) s'étendant le long des première et seconde couches électriquement conductrices (18, 24),
- une seconde couche luminescente (22') disposée entre les première et seconde couches électriquement conductrices (18, 24), la seconde couche luminescente (22') s'étendant le long des première et seconde couches électriquement conductrices (18, 24),
- une matière électroluminescente étant disposée dans la première couche luminescente (22) et dans la seconde couche luminescente (22') dans des régions (30, 30' ; 30a) qui sont séparées spatialement et espacées les unes des autres et qui forment chacune une source lumineuse,
- la seconde couche luminescente (22') est appliquée sur la première couche luminescente (22), et
- les régions (30, 30' ; 30a) séparées spatialement étant situées dans des plans différents dans la première couche luminescente (22) et la seconde couche luminescente (22').

2. Dispositif d'éclairage (10') selon la revendication 1, comportant en outre une première couche imperméable à l'humidité (16) et une seconde couche imperméable à l'humidité (26) entre lesquelles sont situées les couches luminescentes (22, 22').

3. Dispositif d'éclairage (10') selon l'une des revendications précédentes, dans lequel la couche électriquement isolante (20) a des propriétés de réflexion de la lumière.

4. Dispositif d'éclairage (10') selon l'une des revendications précédentes, comportant en outre une couche protectrice transparente (28) du côté du dispositif d'éclairage (10') qui est opposé aux couches luminescentes (22, 22').

5. Dispositif d'éclairage (10') selon l'une des revendications précédentes, dans lequel les couches (18, 20, 22', 24, 28) sont des couches de laque et/ou liquide séchées.

6. Dispositif d'éclairage (10') selon l'une des revendications précédentes, dans lequel au moins une des couches (18, 20, 22, 22', 24, 28) est non flexible et les couches (18, 20, 20', 22, 22, 24, 28) ont une forme tridimensionnelle au moins partiellement incurvée.

7. Dispositif d'éclairage (10') selon l'une des revendications précédentes, dans lequel l'épaisseur des couches luminescentes (22, 22') se situe dans une gamme de 15 µm à 25 µm, et en particulier est de 20 µm.

8. Dispositif d'éclairage (10') selon l'une des revendications précédentes, dans lequel l'épaisseur de la couche électriquement isolante (20) se situe dans une gamme de 11 µm à 21 µm, et en particulier est de 16 µm.

9. Dispositif d'éclairage (10') selon l'une des revendications précédentes, dans lequel la seconde couche électriquement conductrice (24) est plus proche des couches luminescentes (22, 22') que de la couche électriquement isolante (20), est au moins partiellement transparente et a une épaisseur dans une gamme de 1 µm à 9 µm, en particulier dans une gamme de 2 µm à 4 µm.

10. Dispositif d'éclairage (10') selon l'une des revendications précédentes, dans lequel la première couche électriquement conductrice (18) est plus proche de la couche électriquement isolante (20) que des couches luminescentes (22, 22') et a une épaisseur dans une gamme de 11 µm à 20 µm, en particulier est de 15 µm.

11. Dispositif d'éclairage (10') selon l'une des revendications précédentes, dans lequel les régions séparées spatialement (30, 30' ; 30a) des couches luminescentes (22, 22') sont disposées de telle sorte qu'elles ne se chevauchent pas.

12. Dispositif d'éclairage (10') selon l'une des revendications précédentes, dans lequel les régions séparées spatialement (30, 30' ; 30a) ont la même taille.

13. Dispositif d'éclairage (10') selon l'une des revendications 1 à 11, dans lequel les régions séparées spatialement (30, 30' ; 30a) ont des tailles différentes.

14. Dispositif d'éclairage (10') selon l'une des revendications précédentes, dans lequel les régions séparées spatialement (30, 30' ; 30a) sont disposées de façon irrégulière.

15. Panneau de garniture intérieur pour cabine d'avion, comportant un dispositif d'éclairage (10') selon l'une des revendications précédentes.
